# EUROPEAN PATENT APPLICATION

(11) **EP 4 570 713 A1**
(43) Date of publication of application: **18.06.2025**
(21) Application number: 23216261.0
(22) Date of filing: 13.12.2023
(51) Int. Cl.: B65G 29/00

(54) **A TEMPORARY STORAGE TABLE SYSTEM**

(71) Applicant: Kitopi One SPV Limited, Abu Dhabi (AE)
(72) Inventor: Carstens, Ricky Valdemar, 8700 Horsens (DK)
(74) Representative: Patrade A/S

(57) **Abstract**

The present invention relates to a temporary storage table system (100) for handling at least one associated food item (200), said system comprising: a temporary storage table (500) for providing a temporary storage area for the associated food item, said storage table being circular, and rotatable in at least one direction, and a control system being configured for receiving information from an associated sensor (600), and configured for controlling the rotation of the temporary storage table (500) based on the information provided by the associated sensor.

Furthermore, the invention relates to a method for optimizing a temporary storage area (500) for food items, said method comprising the steps of: providing dimensions of at least the width and length of the food item (200) from a sensor, providing a control signal based on the width and length of the food item, entering and/or positioning the food item on the storage table.

## Description

### FIELD OF THE INVENTION

The present invention relates to a temporary storage table system for handling at least one associated food item, such as a packaging comprising food, said system comprising:
a temporary storage table for providing a temporary storage area for the associated food item, said storage table being circular and rotatable in at least one direction,
a control system, said control system being configured for receiving information from an associated sensor, and configured for controlling the rotation of the temporary storage table based on the information provided by the associated sensor.

Furthermore, the invention relates to a method for optimizing a temporary storage area for food items, said method comprising the steps of: providing dimensions of at least the width and length of the food item from a sensor, providing a control signal based on the width and length of the food item, starting rotation of a temporary storage table, wherein the start of rotation is based on the control signal, stopping rotation of the temporary storage table based on the control signal, entering and/or positioning the food item on the storage table.

### BACKGROUND OF THE INVENTION

Within the area of food handling, numerous solutions are known, and numerous systems for online food ordering, handling the online food order and delivering the food are available.

However, none of the known systems provide the opportunity to automatically handle food items from the production of the food to a gathered order, and further do not provide the possibility for orders from different kitchens and/or brands to be collected into one order.

When handling a large number of food orders and thereby handling an even greater number of food items, an area for storing the food items temporarily is essential. However, the space for such area would usually be enormous due to the heavy amount of food items to be handled and temporarily stored.

Hence, an improved temporary storage table system and further an improved method for optimizing a temporary storage area would be advantageous.

### OBJECT OF THE INVENTION

It is an object of the present invention to provide an alternative to the prior art.

In particular, it may be seen as an object of the present invention to provide a temporary storage system and a method that solves the above-mentioned problems by being improved to a more space friendly system and a method for optimizing a temporary storage area for food items.

### DESCRIPTION OF THE INVENTION

Thus, it is intended to obtain the above-described object and several other objects in a first aspect of the invention by providing a temporary storage table system for handling at least one associated food item, such as a packaging comprising food, said system comprising:
- a temporary storage table for providing a temporary storage area for the associated food item, said storage table being:
   - circular, and
   - rotatable in at least one direction,
- a control system, said control system being:
   - configured for receiving information from an associated sensor, and
   - configured for controlling the rotation of the temporary storage table based on the information provided by the associated sensor.

The invention is particularly, but not exclusively, advantageous for providing a system wherein food items from numerous different brands/kitchens can be placed and gathered in one order. More specifically, the invention is providing a storage table system, wherein the space needed for handling a significant amount of food items is optimized, i.e. minimized.

The temporary storage area, being a rotatable table, provides an area wherein the food being prepared and ready for being packed into orders can temporarily be stored while the rest of the order is prepared. Thereby, instead of having food stored in e.g. the kitchens and occupy space in the kitchens, the food items can be temporarily stored on this table. Also, the table makes it possible to easily sort the several food items into different orders.

In the context of the present invention, it should be understood that "food item" is food packaging, such as a box, a bowl, paper/wrap, or any desired packaging for food, wherein the packaging comprises a prepared/cooked food product, such as a burger, pizza, salad, sandwich, or any food placed in an order.

The control system provides at least the controlling of the rotation of the table. Preferably the control system would be provided with inputs from the sensor and/or other relevant devices connected to the system.

It should be understood that the control system may comprise a controller.

The sensor, such as a photocell, provides information regarding a food item before it enters the storage area, and thereby provides a system which only requires an extremely small temporary storage area compared to the amount of food items being handled in the system.

In the context of the present invention, it should be understood that "table" must be understood as a surface area. The word "table" should not be understood as limiting for the invention.

In the context of the present invention, it should be understood that "food item" is food packaging, such as a box, a bowl, paper/wrap, or any desired packaging for food, wherein the packaging comprises a prepared/cooked food product, such as a burger, pizza, salad, sandwich, or any food placed in an order.

In one embodiment of the invention, the system further comprises:
- a sensor, preferably a photocell, wherein said sensor is configured for providing:
   - information of at least the width and/or length of the associated food item, and
   - a control signal based on the width and/or length for controlling the entering position of the food item on the storage table,
preferably said sensor is positioned at an arbitrary position along an associated conveyor.

The embodiment is particularly, but not exclusively, advantageous for providing a system, wherein the dimensions of the food item is known before the food item enters the storage table making it possible to position the food item optimally on the storage table in relation to the size of the food item and the available/unoccupied space on the table.

Furthermore, it is advantageous for providing a system wherein the system effectively can control where along the periphery/circumference of the storage table the food item will enter and thereby control the position of the food item on the storage table.

In one embodiment of the invention, the sensor is an ultrasound sensor.

The embodiment is particularly, but not exclusively, advantageous for ensuring that the food item has entered the storage table properly and has followed the rotation of the table.

In one embodiment of the invention, a sensor is also positioned at a slide.

The embodiment is particularly, but not exclusively, advantageous for ensuring that the control system can control whether the food item has entered the storage table.

In one embodiment of the invention, the storage table, when in use, is rotating:
- continuously, or
- periodically, such as rotating when preparing for a food item to enter the storage table from the conveyor, or such as when receiving a control signal.

In one embodiment of the invention, the system further comprises a robotic arm configured for gripping the food item on a storage table, preferably by using vacuum, such as a suction cup.

The embodiment is particularly, but not exclusively, advantageous for providing the opportunity of implementing a robot arm for gripping the food items in the same system, such that the robot arm and the table are configured for co-operating.

The robotic arm provides the opportunity to automatically reposition the food item from a storage area to the package area and/or the package object, and automatically collecting and sorting the food item into a finished order.

The control system may provide the controlling of the robotic arm, such that the orders can be correctly collected and sorted into one gathered order.

In one embodiment of the invention, the system further comprises a database for storing information of the associated food items provided by at least the sensor.

The embodiment is particularly, but not exclusively, advantageous for obtaining a database with information usable for optimizing the performance of a system and the parts/areas of the system.

It should be understood that the control system is configured to transmit data to a database and to receive data from a database, said data preferably being provided from the sensor, preferably also from a vision system.

In one embodiment of the invention, the system further comprises a vision system, such as a vision camera, for providing:
- information of the gripping position of the associated food item on the storage table, and/or
- information from ID positioned on the associated food item, said ID information being:
   - height, width, and length of the food item, and/or
   - an indication of an order number of the food item,
   - preferably, information for providing an optimal packaging sequence, such as temperature of the food item,
wherein the ID preferably is a machine-readable representation of information, such as a bar code, a matrix code, a QR code, Radio Frequency ID, and preferably being presented on a label.

The embodiment is particularly, but not exclusively, advantageous for providing a system that can identify the food item to be picked and from this identification provide information regarding the optimal gripping position.

Furthermore, it is advantageous for providing a system wherein the repositioning of a food item is performed optimally, such that the food product in the food packaging is not damaged.

The vision system may perform the best possible gripping position by identifying the center position of the surface of the food item. When determining the center position the X and Y (surface dimensions) position is determined and preferably also the Z (height) position and the rotation/angle of the food item is determined.

This will provide optimal information for the system such that the robotic arm can grip/collect the food item correctly.

If the vision system is a 2D system, the vision camera determines the surface dimensions X and Y. The Z dimension, being the height, is obtained through the ID, which comprises information stored in a database about the dimensions of the food item/food packaging.

If the vision system is a 3D system, the vision camera determines both the surface dimensions X and Y and the Z dimension being the height of the food item and further also the rotation/angle of the item.

The vision system, such as a vision camara, provides the possibility of capturing information relating to the food items positioned at the storage area. The food items are each provided with an ID, and the vision system is at least capable of obtaining information from these different IDs and thereby automatically collect and sort the items into the right gathered order. The system may also be able to obtain information of the food item, such as shape and dimensions without the ID. In the context of the present invention, it should be understood that the vision system may be both a 2D and/or 3D vision system.

In the context of the present invention, it should be understood that "ID" can be a various IDs, such as a bar code, a matrix code, a QR code, Radio Frequency ID, etc. The invention should not be limited to a specific type of an ID.

The ID of the invention may at least be representing or comprising information about the food item, such as the type of food packaging and/or the dimensions of the food packaging.

Furthermore, the ID may comprise information on the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

In one embodiment of the invention, the one or more food items are sorted into one gathered order at a package area or in a package object, wherein the ID of the food item(s) provides the information of when an order is completed.

In one embodiment of the invention, the system allows for identification of a food item being oversized compared to the package area or package bag, preferably said oversized food item is being handled manually.

The embodiment is particularly, but not exclusively, advantageous for identifying that a food item is too big - oversized - to fit into or onto the package area, such as a tray, and/or or a package object, such as a bag.

The oversized food item can be identified by one or more of: the scanner via the ID information, the sensor and/or the vision system.

The oversized food item may be sorted out before entering the temporary storage area, or the oversized food item may enter the storage area and then be sorted out from the storage area.

The oversized food item can be handled by the robotic arm but is preferably handled manually.

In one embodiment of the invention, the system comprises a conveyor with a slide in the end towards the temporary storage table for guiding the associated food item to the temporary storage table.

The embodiment is particularly, but not exclusively, advantageous for providing an effective and safe entering of the food item into the storage area.

In one embodiment of the invention, an algorithm is configured to determine the entering position of the associated food item on the temporary storage table based on the control signal of the sensor and the velocity of the conveyor.

The embodiment is particularly, but not exclusively, advantageous for providing a system that determines the optimal position of the food item on the table. By optimal should be understood that the possibility of determining the entering position of the food item on the table, and the possibility of minimizing the space needed for the temporary storage area/the table, are achieved.

In the context of the present invention, "entering position" may be understood as the position where on the outer edge of the table the food item enters the table, preferably from a conveyor.

In one embodiment of the invention, the storage area is a temporary storage table system for handling at least one associated food item, such as a packaging comprising food, said system comprising:
- a temporary storage table for providing a temporary storage area for the associated food item, said storage table being:
   - circular, and
   - rotatable in at least one direction,
- a control system, said control system being:
   - configured for receiving information from an associated sensor, and
   - configured for controlling the rotation of the temporary storage table based on the information provided by the associated sensor.

The embodiment is particularly, but not exclusively, advantageous for providing a system wherein food items from numerous different brands/kitchens can be placed and gathered in one order. More specifically, the invention is providing a storage table system, wherein the space needed for handling a significant amount of food items are optimized, such as minimized. The temporary storage area, being a rotatable table, provides an area wherein the food being prepared and ready for being packed into orders can be temporarily stored while the rest of the order is prepared. Thereby, instead of having food stored in e.g. the kitchens and occupy space in the kitchens, the food items can be temporarily stored on this table. Also, the table makes it possible to easily sort the several food items into different orders.

The control system provides at least the controlling of the rotation of the table. Preferably the control system would be provided with inputs from the sensor and/or other relevant devices connected to the system.

The sensor, such as a photocell, provides information on a food item before it enters the storage area, and thereby provides a system which requires an extremely small temporary storage area compared to the amount of food items being handled in the system.

In the context of the present invention, it should be understood that "table" must be understood as a surface area. The word "table" should not be understood as limiting for the invention.

In one embodiment of the invention, an algorithm is configured to provide a sorting command, such as a packaging sequence of the associated food item based on information from the ID.

The embodiment is particularly, but not exclusively, advantageous for providing a sorting of the food items, wherein the sorting is not random, but the optimal sorting, such as positioning warm food strategically away from cold food.

Based on ID information, the most suitable packaging sequence for any specific order can be obtained.

In one embodiment of the invention, an algorithm is a machine learning algorithm adapted to be trained by the collected data from a database.

The embodiment is particularly, but not exclusively, advantageous for providing a system wherein the performance of the system is optimized for any order performed.

In a second aspect, the invention further relates to a method for optimizing temporary storage areas for food items, said method comprising the steps of:
- providing dimensions of at least the width and length of the food item from a sensor,
- providing a control signal based on the width and length of the food item,
- starting rotation of a temporary storage table, wherein the start of rotation is based on the control signal,
- stopping rotation of the temporary storage table based on the control signal,
- entering and/or positioning the food item on the storage table.

The second aspect of the invention is particularly, but not exclusively, advantageous for providing a method wherein food items from numerous different brands/kitchens can be placed and gathered in one order. More specifically, the invention is providing a method for optimizing a storage area, wherein the space needed for handling a significant amount of food items is optimized, such as minimized.

In one embodiment of the invention, the method further comprises the steps:
- providing an ID on the food item, such as a bar code, a matrix code, a Radio Frequency ID and/or a QR code,
- reading the ID, preferably by a vision system or, if Radio Frequency ID, a RF reader,
- providing the gripping position of the associated food item on the temporary storage table,
- gripping the food item from the temporary storage table by a robotic arm.

In one embodiment of the invention, the method further comprises the step:
- sorting the food item into a package area and/or a package object based on the information provided by the ID, preferably the sorting is based on a determined packaging sequence.

In one embodiment of the invention, the method further allows for identification of a food item being oversized compared to the package area or package bag, said oversized food item is being guided out for manual handling.

In one embodiment of the invention, an algorithm is provided for:
- determining the entering position of the food item on the temporary storage table.

In one embodiment of the invention an algorithm is provided for:
- determining a gripping approach of the food item by the robot arm, and/or
- determining a packaging sequence of an order at the package area and/or in a package object.

In one embodiment of the invention, a database is provided wherein said method further comprises the step of:
- storing data at least from the sensor in the database,
- using the stored data in at least one algorithm,
said algorithm preferably being trained by machine learning for at least:
- optimizing the positioning of the food item on the storage table, and more preferably further trained for:
- optimizing a gripping approach of the food item by the robotic arm, and/or
- optimizing a packaging sequence of the order at the package area and/or in a package object.

The embodiment is particularly, but not exclusively, advantageous for obtaining a database with information usable for optimizing the performance of a system and the parts/areas of the system and furthermore for obtaining a method wherein the performance is optimized at any step taken for any order performed.

In a third aspect, the invention further relates to a computer program comprising instructions which, when the program is executed by a computer, cause the computer to carry out at least the steps of starting rotation and stopping rotation of the temporary storage table in the method of the second aspect.

The first, second and third aspects of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Figure 1 illustrates a 3D drawing of the temporary storage table system.
Figure 2 illustrates the temporary storage table system from above.
Figure 3 illustrates a robotic arm packing a food item.

### DETAILED DESCRIPTION OF THE INVENTION

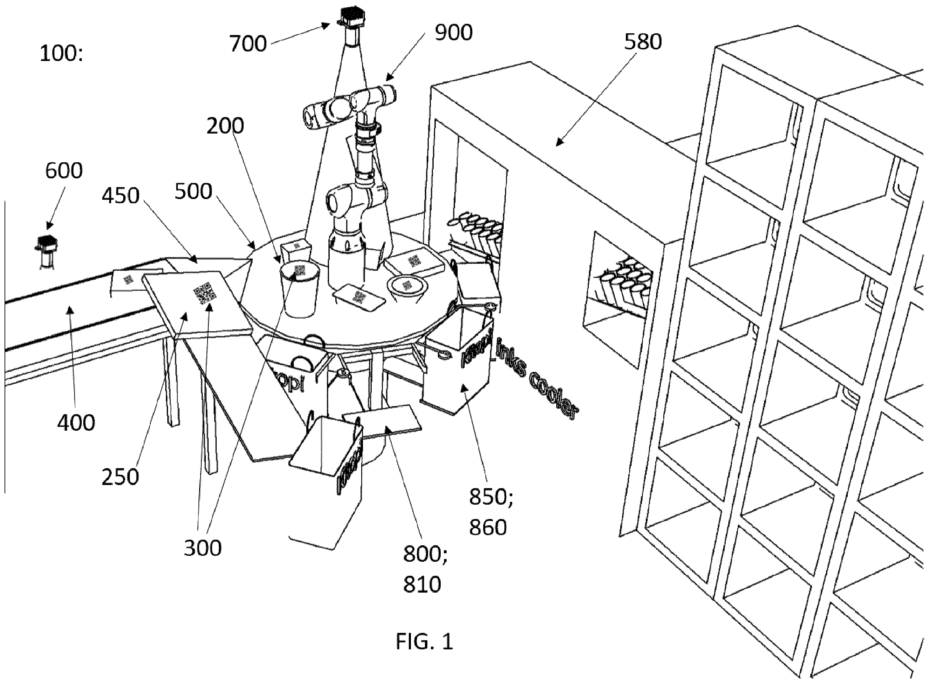

FIG. 1 illustrates a 3D drawing of a temporary storage table system 100.

A temporary storage table system for handling at least one associated food item 200, such as a packaging comprising food, said system comprising:
- a temporary storage table 500 for providing a temporary storage area for the associated food item 200, said storage table being:
   - circular, and
   - rotatable in at least one direction,
- a control system, said control system being:
   - configured for receiving information from an associated sensor 600, and
   - configured for controlling the rotation of the temporary storage table 500 based on the information provided by the associated sensor 600.

The system may be a part of an even broader system for handling one or more associated food item(s) 200 with an associated ID 300, such as a packaging comprising food, said broader system illustrated in FIG. 1 may comprise one, or more, or all of:
- a reader, such as a scanner, configured for reading the ID 300 of the food item 200 (not shown),
- a conveyor 400, preferably a plurality of conveyors, for transporting the associated food 200 item to a temporary storage area 500, the conveyor in FIG. 1 comprises a slide 450 positioned at the end of the conveyor 400 towards the storage area 500 for guiding the associated food item 200 to the storage area.
- a temporary storage area 500, in FIG. 1 the area is a rotatable table being circular 500,
- a sensor 600, positioned at an arbitrary position along the conveyor 400, in FIG. 1 the sensor is a photocell 600, though it could be any type of sensor, such as an ultrasound sensor,
- preferably a sensor is also positioned at the slide 450 (not shown),
- a vision system 700, such as a vision camara, for capturing information from the storage area 500,
- a package area 800, such as a tray 810, and/or or a package object 850, such as a bag 860,
- a robotic arm 900 for repositioning the food item 200 from the storage area 500 to the package area 800 and/or the package object 850,
- a control system, for controlling the robotic arm based on input from at least the vision system 700 (not shown).

The information represented in the ID 300 is being at least:
- height of the associated food item 200, preferably also width and length, and/or
- an indication of an order number of the associated food item 200.

Further, FIG. 1 illustrates a large food item 250 that is an oversized item 250 relative to the package area 800 or package bag 850, preferably said oversized food item 250 is being handled manually.

The oversized food item 250 may be sorted out before entering the temporary storage area 500, or the oversized food item 250 may enter the storage area 500 and then be sorted out from the storage area.

The oversized food item 250 can be handled by the robotic arm 900 but is preferably handled manually.

Moreover, FIG. 1 illustrates a system 100 comprising a separate area 580 for cold food items, such as beverages, dressings, ice cream, wherein the at least one robotic arm 900 is configured for gripping the cold food item, and preferably the separate area 580 also comprises extra items, such as disposable cutlery.

Also, FIG. 1 illustrates a vision system 700 focusing on part of the temporary storage area 500.

When a food item 200 enters the storage area 500 from the conveyor 400, it is detected by the vision system 700. If the storage area 500 is rotating, such as a rotating table, it is registered how much the table rotates via signals from the table, such that the system registers the movement of the item 200, and such that the robotic arm 900 can easily be controlled according to where on the storage area 500 it must grip for the item 200.

The robotic arm 900 provides the opportunity to automatically reposition the food item 200 from a storage area 500 to the package area 800 and/or the package object 850 and automatically collect and sort the food item 200 into a finished order.

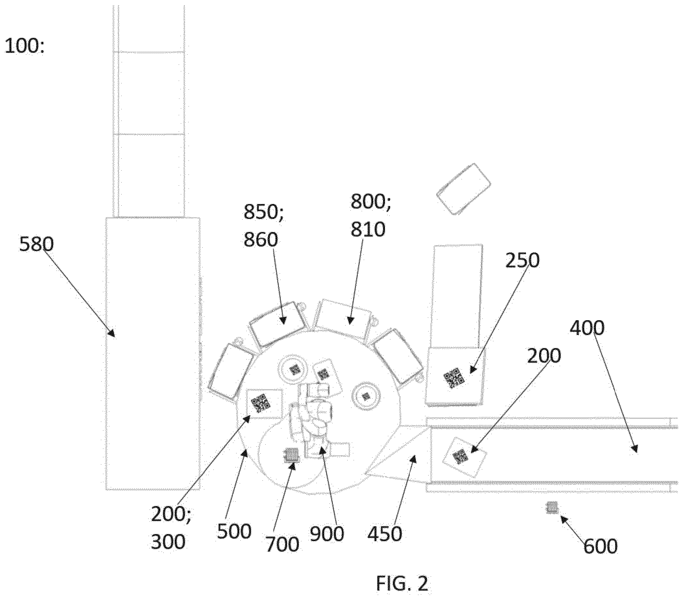

FIG. 2 illustrates a food handling system 100 from above, the illustrated system corresponds to the system illustrated in FIG. 1.

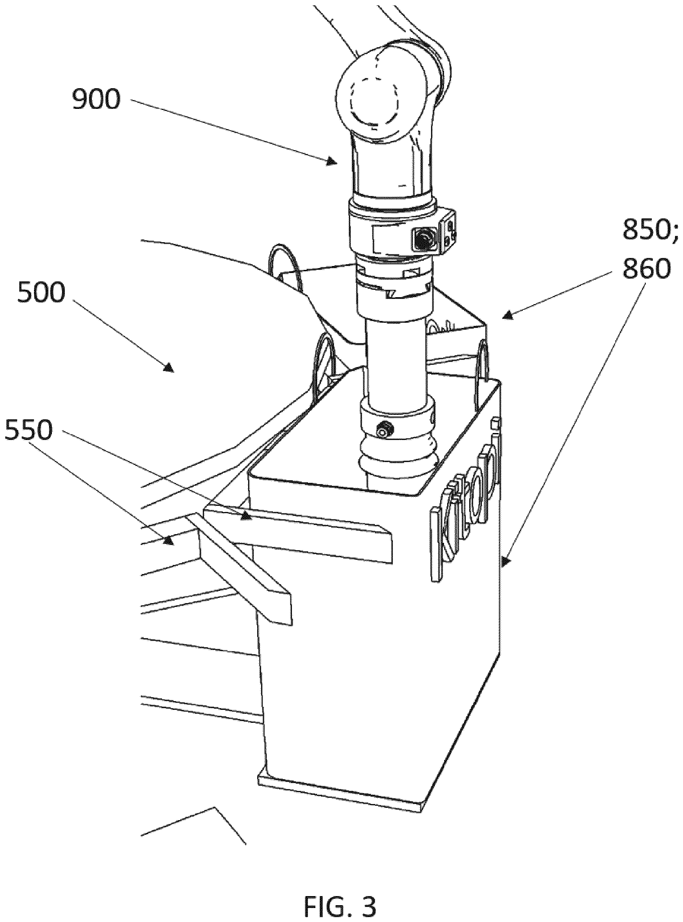

FIG. 3 illustrates a robotic arm 900 packing a food item 200.

It is seen from FIG. 3 that the robotic arm 900 is designed to fit into the bag.

Also, it is illustrated that the package area 850, such as a bag 860 as in FIG. 3, is attached to the temporary storage area 500 by two brackets 550.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is possible and advantageous.

## Claims

1. A temporary storage table system for handling at least one associated food item, such as a packaging comprising food, said system comprising:
- a temporary storage table for providing a temporary storage area for the associated food item, said storage table being:
- circular, and
- rotatable in at least one direction,
- a control system, said control system being:
- configured for receiving information from an associated sensor, and
- configured for controlling the rotation of the temporary storage table based on the information provided by the associated sensor.

2. A system according to claim 1, wherein the system further comprises:
- a sensor, preferably a photocell, wherein said sensor is configured for providing:
- information of at least the width and/or length of the associated food item, and
- a control signal based on the width and/or length for controlling the positioning of the food item on the storage table,
preferably said sensor is positioned at an arbitrary position along an associated conveyor.

3. A system according to any of the preceding claims, wherein the storage table, when in use, is rotating:
- continuously, or
- periodically, such as rotating when preparing for a food item to enter the storage table from the conveyor, such when receiving a control signal.

4. A system according to any of the preceding claims, wherein the system further comprises a robotic arm configured for gripping the food item on a storage table, preferably by using vacuum, such as a suction cup.

5. A system according to any of the preceding claims, wherein the system further comprises a database for storing information on the associated food item provided by at least the sensor.

6. A system according to any of the preceding claims, wherein the system further comprises a vision system, such as a vision camera for providing:
- information of the gripping position of the associated food item on the storage table, and/or
- information from ID positioned on the associated food item, said ID information being:
- height, width, and length of the food item, and/or
- an indication of an order number of the food item,
- preferably, information for providing an optimal packaging sequence, such as temperature of the food item,
wherein the ID preferably is a machine-readable representation of information, such as a bar code, a matrix code, a QR code, Radio Frequency ID, and preferably being presented on a label.

7. A system according to any of the preceding claims, wherein an algorithm is configured to determine the entering position of the associated food item on the temporary storage table based on the control signal of the sensor and the velocity of the conveyor.

8. A system according to any of the preceding claims, wherein an algorithm is configured to provide a sorting command, such as a packaging sequence of the associated food item based on information from the ID.

9. A system according to any of the preceding claims, wherein the algorithm is a machine learning algorithm adapted to be trained by the collected data from a database.

10. A method for optimizing a temporary storage area for food items, preferably in a system according to claims 1-9, said method comprising the steps of:
- providing dimensions of at least the width and length of the food item from a sensor,
- providing a control signal based on the width and length of the food item,
- starting rotation of a temporary storage table, wherein the start of rotation is based on the control signal,
- stopping rotation of the temporary storage table based on the control signal,
- entering and/or positioning the food item on the storage table.

11. A method according to claim 10, wherein the method further comprises the steps:
- providing an ID on the food item, such as a bar code, a matrix code, a Radio Frequency ID and/or a QR code,
- reading the ID, preferably by a vision system or, if Radio Frequency ID, a RF reader,
- providing the gripping position of the associated food item on the temporary storage table,
- gripping the food item from the temporary storage table by a robotic arm.

12. A method according to claims 10-11, wherein the method further comprises the step:
- sorting the food item into a package area and/or a package object based on the information provided by the ID, preferably the sorting is based on a determined packaging sequence.

13. A method according to claims 10-12, wherein an algorithm is provided for:
- determining the entering position of the food item on the temporary storage table.

14. A method according to claims 10-13, wherein a database is provided and wherein said method further comprises the steps of:
- storing data at least from the sensor in the database,
- using the stored data in at least one algorithm,
said algorithm preferably being trained by machine learning for at least:
- optimizing the entering position of the food item on the storage table, and more preferably further trained for:
- optimizing a gripping approach of the food item by the robotic arm, and/or
- optimizing a packaging sequence of the order at the package area and/or in a package object.

15. A computer program comprising instructions which, when the program is executed by a computer, cause the computer to carry out at least the steps of starting rotation and stopping rotation of the temporary storage table in the method of claim 10.
